# EUROPEAN PATENT APPLICATION

(11) **EP 1 998 417 A1**
(43) Date of publication of application: **03.12.2008**
(21) Application number: 07715104.1
(22) Date of filing: 01.03.2007
(51) Int. Cl.: H01S 3/06

(54) **MULTIWAVEFORM LIGHT SOURCE**

(30) Priority: 02.03.2006 JP 2006056138
(71) Applicant: CENTRAL GLASS COMPANY, LIMITED, Ube-shi, Yamaguchi-ken 755-0001 (JP)
(72) Inventor: TESHIMA, Takuya c/o Nasu R&D Center of, Tochigi 329-2811 (JP); KUBOTA, Yoshinori c/o Nasu R&D Center of, Tochigi 329-2811 (JP)
(74) Representative: Manitz, Finsterwald & Partner GbR
(86) International application number: PCT/JP2007/053891
(87) International publication number: WO 2007/100034

(57) **Abstract**

There is provided a light source apparatus including at least a excitation light source and a photocoupler, a light source medium formed of one kind of a single, rare-earth element doped fiber that is excited by the excitation light source and has two terminals, and an output end formed of an optical fiber, the light source apparatus being **characterized in that** an optical component having at least one of reflection, branching or attenuation function is provided in anywhere of an optical circuit from the light source medium to the output terminal and that it is possible to output lights of different wavelengths derived from different spontaneous emission light peaks that are generated from rare-earth element ions added to the rare-earth element doped fiber, and that at least one of the lights to be obtained is visible light.

## Description

### TECHNICAL FIELD

The present invention relates to a multiwaveform light source capable of outputting lights of different wavelengths.

### BACKGROUND OF THE INVENTION

Rare-earth element doped fibers have been used as wavelength conversion components, for light source uses such as amplifier, spontaneous emission light (ASE) light source and laser. Hitherto, there has also been a study of a technique for obtaining lights having wavelengths shorter than the visible light by using up-conversion process, and it has become possible to obtain lights of various wavelengths by rare-earth doped fibers (see Non-patent Publication 1 and Patent Publication 1).

However, in case that lights of different wavelengths are necessary, in general, it has been necessary to prepare a plurality of light source apparatuses. In this case, a plurality of lasers of different wavelengths or the like are used, but the apparatus may become large-scale. Therefore, there have been problems such as not only necessity for wide space and cooler, but also time and cost for maintenance.

In contrast with this, it is known that a plurality of laser lights of different wavelengths are obtained at 1550nm band in a fiber laser using Er³⁺. Many of these are those invented with their use as a light source for optical communication in mind, and they generate a light of a band region that is amplified by a light amplifier (see, for example, Patent Publication 2).

Furthermore, there is a report that a visible light laser oscillation of blue color (492nm) and green color (521nm) is obtained.
Patent Publication 1: Japanese Patent Application Publication 2005-26475
Patent Publication 2: Japanese Patent Application Publication 10-209501
Non-patent Publication 1: Michel J. F. Digonnet; "Rare-Earth-Doped Fiber Lasers and Amplifiers"; MARCELDEKKER, INC. (1993); pp171-242.
Non-patent Publication 2: D. M. Baney, G. Rankin, K. W. Chan; Appl. Phys. Lett. 69: pp1662-1664, (1996)

### SUMMARY OF THE INVENTION

However, many of fiber lasers using Er³⁺ as described in the above Japanese Patent Application Publication 10-209501 are those invented with their use as a light source for optical communication in mind, and they generate a light of a band region that is amplified by a light amplifier. Therefore, they use ASE peaks existing in 1550nm band of Er³⁺ and generate laser lights of a plurality of wavelengths in this band region.

However, in the case of thinking of simultaneously generating a plurality of laser lights by the same principal in a wavelength region from visible light to near infrared, it is not possible to obtain a multiwaveform light source in the above wavelength region by the identical method, due to no existence of ASE in a wide band region.

On the other hand, in the above publication of Baney et al., visible light laser oscillation of blue light and green light of different wavelengths in visible light region has been confirmed, and the possibility of multicolor in the future has been shown, but both ends of the fiber have reflective coating, and spatial optical system is used for many of optical systems. Therefore, this method had a problem such as that it is inferior in industrial productivity and is not practical.

The present invention was made in view of the above situation, and it is an object of the present invention to provide a light source apparatus for simultaneously generating lights of a plurality of wavelengths including visible region from a single apparatus.

According to the present invention, there is provided, for solving the above task, a light source apparatus comprising at least a excitation light source and a photocoupler, a light source medium formed of one kind of a single, rare-earth element doped fiber that is excited by the excitation light source and has two terminals, and an output end formed of an optical fiber, the light source apparatus being **characterized in that** an optical component having at least one of reflection, branching or attenuation function is provided in anywhere of an optical circuit from the light source medium to the output terminal and that it is possible to output lights of different wavelengths derived from different spontaneous emission light peaks that are generated from rare-earth element ions added to the rare-earth element doped fiber, and that at least one of the lights to be obtained is visible light.

### BRIEF DESCRIPTION OF THE DRAWINGS

Fig. 1 is a schematic view showing structure of a laser multicolor light source according to Example 1 of the present invention;
Fig. 2 is a schematic view showing structure of an ASE multicolor light source according to Example 2 of the present invention;
Fig. 3 is a schematic view showing structure of a laser and ASE mixed multicolor light source according to Example 3 of the present invention;
Fig. 4 is a schematic view of a reflective mirror module in Example 3; and
Fig. 5 is a schematic view of structure of a multicolor light source in the case of forming a ring-type, laser oscillator according to Example 4 of the present invention.

### DETAILED DESCRIPTION

According to the present invention, it is possible to obtain a simple light source apparatus that makes it possible to simultaneously take out lights of a plurality of wavelengths including visible region from one light source.

The present invention can be used for an applied field of optical transmission such as evaluation and measurement as well as communication system in optical communication field.

In the following, the present invention is exemplarily explained in detail with reference to the attached drawings.

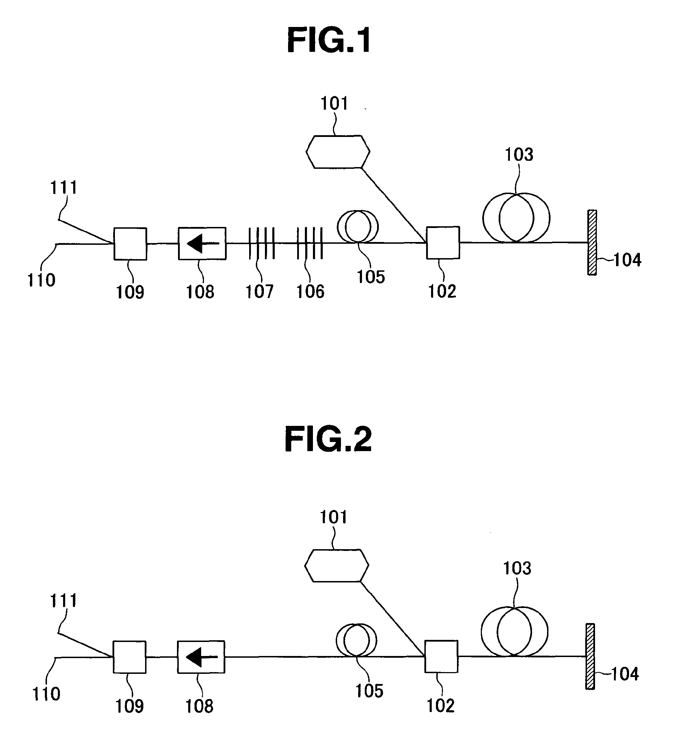

Fig. 1 is a schematic view showing an example of a light source apparatus of the present invention. In this example, it is possible to obtain laser lights of two different wavelengths. The light source apparatus is composed of excitation light source 101, first photocoupler 102, rare-earth element doped fiber 103, reflective mirror 104, optical fiber filter 105, first fiber Bragg grating (FBG) 106, second FBG 107, optical isolator 108, second photocoupler 109, first output end 110, and second output end 111.

Although the excitation light source is assumed to be a semiconductor laser, it may be one in which another solid laser, gas laser, lamp, LED or the like is coupled to an optical fiber. It is ideal to use it by attaching an optical isolator.

The excitation light source may have a longer wavelength or shorter wavelength than the wavelength to be obtained, and any wavelength can be used as long as an efficient excitation is possible.

Wavelength and power of the excitation light are examined according to wavelength of the light to be obtained and the type of the rare-earth element doped fiber to be used. It may not necessarily be a single wavelength, and may be a mixture of lights of a plurality of wavelengths.

Specification of the photocoupler is determined by the excitation light wavelength and the light source wavelength to be obtained. It is desired to be capable of supplying the excitation light to the rare-earth element doped fiber with a loss as small as possible and to have a loss as small as possible also to the light to be obtained.

The rare-earth element doped fiber refers to an optical fiber that various kinds of optical fibers, such as silica, silicate, fluoride and chalcogenide series, have been doped at core or cladding with a rare-earth element such as Er, Pr, Nd, Ho and Tm. The type of rare-earth is selected according to wavelength of the light to be obtained or wavelength of the excitation light. In some cases, it is possible to conduct a codoping with other rare-earths and transition metals or a doping with different elements at cladding and core.

In the present invention, one light source apparatus is equipped with one kind of a single, rare-earth element doped fiber. Herein, "one kind of a single" refers to that a fiber relating to the excitation light is singular in the light source structure. That is, it is possible in the light source of the present invention to simultaneously generate lights of a plurality of wavelengths by one kind of a single fiber excited.

In the case of the present example, the reflective mirror is essentially for forming a laser oscillator structure and has a high reflectance to one or a plurality of laser wavelengths to be obtained. Although reflectance has arbitrariness in design, it is generally around 50-99.9%.

It is also possible to increase reflectance to wavelength of the excitation light for the purpose of improving energy efficiency of the light source itself. With this, it is possible to introduce again the excitation light escaping out of the oscillator, into the rare-earth element doped fiber, thereby improving energy efficiency.

Furthermore, there may exist a high efficiency wavelength by positively confining even a light having a wavelength other than the target wavelength in the oscillator, for improving the excitation light rate and the output at the target wavelength.

Even in the case of considering an ASE light source that is different from that of the present example, it is possible to improve ASE power by using the reflective mirror. In the case of ASE light source, however, reflective mirror is not necessarily requisite.

Alternatively, it is possible to monitor optical power with optical sensor or the like by lowering reflectance of the reflective mirror without relying on the laser light source and the ASE light source.

Although an example using a mirror is shown in the present example, it is not particularly limited to reflective mirror. It is also possible to use a reflective component such as FBG as a substitute.

An ordinary optical fiber is used for optical fiber filter 105. Bending loss is generated by bending optical fiber according to its NA, bending curvature and the like. It is found on the long wavelength side. Therefore, it can be used as a long wavelength cutting filter by selecting fiber. It is also optional to suppress a long wavelength light outputted from the rare-earth element doped fiber by controlling NA, bending curvature and the like of the rare-earth element doped fiber.

It is not necessary to limit the method for attenuating an unnecessary light of long wavelength to particularly this method. It is also possible to use a method using a dielectric multilayer film filter, absorptive mirror, or the like.

As a method for attenuating unnecessary lights of short wavelengths, there are a method of using a dielectric multilayer film filter and a method of using an absorptive mirror or a filter or fiber doped with an absorptive substance.

Characteristics of first and second FBG's are determined by laser lights of different wavelengths to be obtained. This two FBG's and the reflective mirror make respective pairs to form laser oscillators.
Reflectance has arbitrariness, and it is possible to control output, efficiency and balance of two kinds of laser light powers by the change of reflectance.

FBG is a light reflective device and has been used in the present example in order to form a laser oscillator. Therefore, the position of FBG is required that FBG's that make the pairs are disposed such that oscillators are constructed at both ends of the rare-earth element doped fiber.

Although an example using FBG has been shown in this example, it is not limited to FBG. Basically, it suffices to form a laser oscillator. It is optional to use a reflective mirror, to form a film on the fiber edge face, or to use another method.

Alternatively, in the case of obtaining a laser light source, it is also possible to form an oscillator by using a weak reflective light from the fiber edge face in place of FBG of low reflectance.

The second photocoupler is for separating a laser light of a wavelength of 543nm and a laser light of a wavelength of 850nm, which have been generated by this light source. It is not particularly necessary in case that separation is not necessary.

### EXAMPLE 1

In the following, the present invention is explained by citing examples.

The present examples is a case in which laser lights of two different wavelengths based on Fig. 1 are obtained.

As rare-earth element doped fiber 103, an erbium-doped fluoride fiber having a length of 1m and an erbium concentration of 4000ppm was used.

As excitation light source 101, there was used a semiconductor laser of a wavelength o 972nm with an isolator.

As first photocoupler 102, one capable of multiplexing the excitation light and a laser light to be generated, that is, an excitation light of 972nm and laser lights of 543nm and 850nm, was used.

Two oscillators were formed by reflective mirror 104, first FBG 106 and second FBG 107.

As a reflective mirror, one having a reflectance of 90% or greater at wavelengths of 543nm and 850nm was used. Reflectance at 972nm of the excitation light was 45%.

Optical fiber filter 105 had an NA of 0.13 and a cutoff wavelength of 730nm.

First FBG had a reflectance of 80% at a wavelength of 543nm and a reflectance of 80% at a wavelength of 850nm. An optical isolator capable of being used at a wavelength of 543nm and a wavelength of 850nm was used.

Laser light of a wavelength of 543nm and laser light of a wavelength of 850nm were separated by second photocoupler 109.

Excitation light source 101 outputs about 400mW of an excitation light of 972nm. This excitation light passes through photocoupler 102, is introduced into erbium-doped fluoride fiber 103, and activates erbium in the erbium-doped fluoride fiber. The activated erbium emits ASE lights of some wavelength regions. Of these ASE lights, lights of 850nm and 543nm are subjected to laser oscillation in the oscillator, and respectively pass through first FBG and second FBG. A laser light of 543nm is outputted from output end 110, and a laser light of 850nm is outputted from output end 111. A light of long wavelength, for example, 1550nm, of ASE light is sufficiently attenuated and is not outputted by the filter fiber.

The outputs upon this were 2.5mW with a laser light of 543nm and 1.1mW with a laser light of 850nm.

### EXAMPLE 2

The present example is an example of a light source apparatus having a structure from which first FBG and second FBG have been removed. In this example, it is possible to take out ASE lights of 550nm band and 850nm band from two different output ends.

Example 1 was conducted in the same way except the omission of first FBG and second FBG.

An ASE light of a wavelength of 550nm band and an ASE light of a wavelength of 850nm band were respectively obtained from output end 110 and output end 111.

### EXAMPLE 3

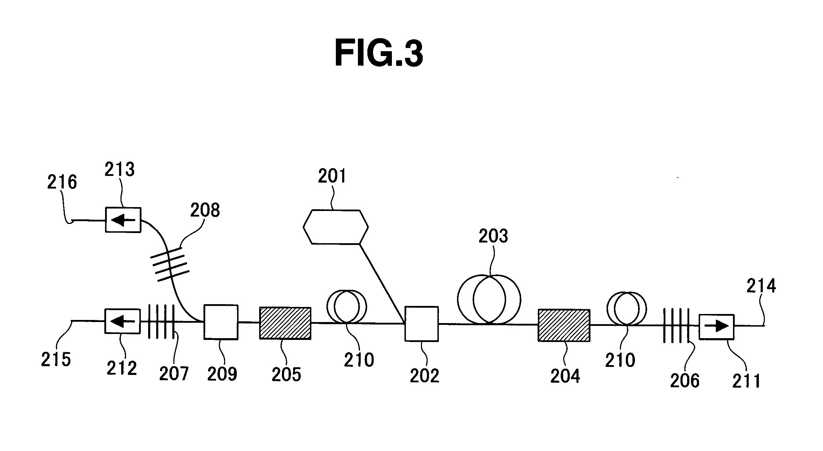

Fig. 3 is a schematic view showing a light source apparatus. In the light source apparatus in this example, laser lights of three different wavelengths are obtained, and furthermore a laser light and an ASE light of one wavelength band are simultaneously emitted from one port.

The light source apparatus is composed of excitation light source 201, first photocoupler 202, rare-earth element doped fiber 203, first reflective mirror module 204, second reflective mirror module 205, first FBG 206, second FBG 207, third FBG 208, second photocoupler 209, optical fiber filter 210, first optical isolator 211, second optical isolator 212, third optical isolator 213, first output end 214, second output end 215, and third output end 216.

As rare-earth element doped fiber 203, a praseodymium and ytterbium co-doped fluoride fiber having a length of 1m, a praseodymium concentration of 1000ppm and an ytterbium concentration of 10000ppm was used.

A laser light of 840nm obtained by semiconductor laser and a laser light of 1015nm obtained by fiber laser were used for excitation light source 201. 100mW of excitation light of 840nm was outputted, and 400mW of laser light of 1015nm was outputted. These excitation lights were multiplexed by the photocoupler, and furthermore an isolator was attached thereto. This was used as an excitation source.

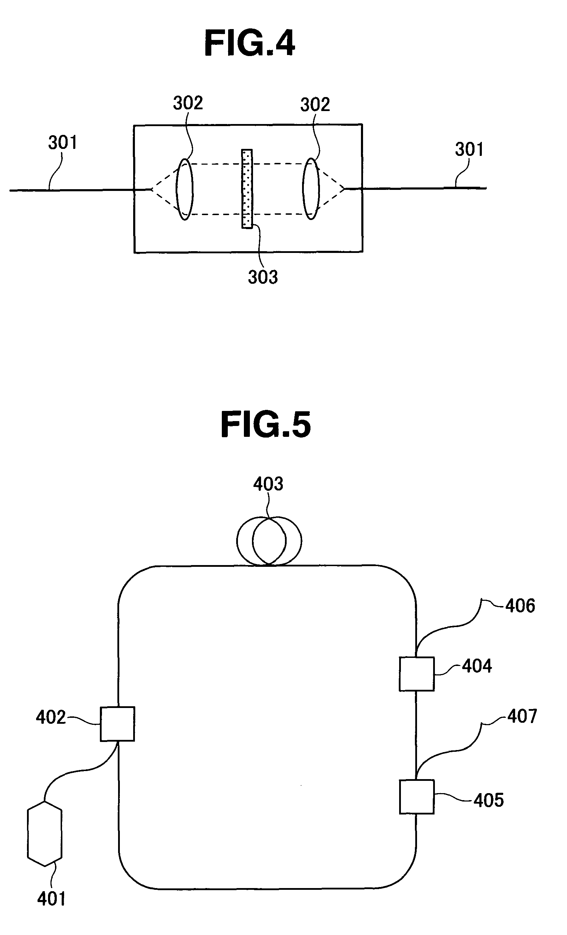

As first and second reflective mirror modules 204 and 205, modules were used which have a structure in which a laser light in optical fiber 301 is once made into a collimated light by collimate lens 302, followed by passing through or reflection from filter mirror 303 and then respectively making light incident on the opposite side or the original optical fiber 301 (Fig. 4).

As the filter used in first reflective mirror module 204, there was used a filter having reflections respectively to wavelengths of 635nm and 600nm respectively outputted from second and third output ends and having small reflectances to a blue light and a light of 521nm outputted from first output end. Reflectances to wavelengths of 635nm and 600nm were 95%. On the other hand, reflectances to the blue light and the light of 521nm were less than 3%.

As the filter used in second reflective mirror module 205, there was used a filter having reflections respectively to a blue light and a light of 521nm outputted from first output end and having small reflectances to lights of 600nm and 635nm outputted from second and third output ends. Reflectances to the blue light and a wavelength of 521nm were 93%. On the other hand, reflectances to the lights of 600nm and 635nm were less than 4%. The second reflective mirror is not necessarily required to have a reflection to blue color light.

First FBG 206 and second reflective mirror module 205 make a pair, thereby forming a laser oscillator to a wavelength of 521nm. Reflectance was 80%.

Second FBG 207 and first reflective mirror module 204 make a pair, thereby forming a laser oscillator to a wavelength of 635nm. Reflectance was 80%.

Third FBG 208 and first reflective mirror module 204 make a pair, thereby forming a laser oscillator to a wavelength of 600nm. Reflectance was 80%.

Second photocoupler is for separating laser lights of 635nm and 600nm.

For two optical fiber filters 210, 2m of a fiber having an NA of 0.13 and a cutoff wavelength of 0.57µm was used, and it was wound to have a diameter of 5cm. With this, a light having a wavelength longer than about 0.9µm is attenuated and is not outputted from the first to third output ends.

An excitation light of 100mW at 840nm and 400mW at 1015nm was outputted from the excitation light source. This excitation light passes through photocoupler 202, then is introduced into praseodymium and ytterbium co-doped fluoride fiber 203, and then activates praseodymium in praseodymium and ytterbium co-doped fluoride fiber 203. The activated praseodymium emits ASE lights of some wavelength regions. Of these ASE lights, lights of 635nm, 600nm and 521nm are subjected to laser oscillation in the oscillator. They are respectively outputted from second output end 215, third output end 216 and first output end 214 via second optical isolator 212, third optical isolator 213 and first optical isolator 211. A blue color ASE light at around 490nm is reflected from second reflective mirror module 205 or directly passes through first optical isolator 211 and then is outputted from first output end 214.

Relative to laser light, first to third optical isolators can prevent incidence of light from the outside of the oscillator, thereby stabilizing laser output. Furthermore, it is possible to prevent an unexpected laser oscillation, which is generated by forming an oscillator in ASE light source with a reflective object of the outside of the apparatus.

Of the excitation lights, a light not absorbed by praseodymium and ytterbium co-doped fluoride fiber 203 was attenuated by first reflective mirror module 204 and first optical isolator 211 and therefore was not outputted.

Although ASE light is observed at 1.3µm band in praseodymium and ytterbium co-doped fluoride fiber, it was attenuated by optical fiber filter 210 and therefore was not outputted.

As the light source, there were obtained about 10µW of 490nm blue-color ASE light, 1mW of 521nm laser light and 8mW of 635nm laser light.

### EXAMPLE 4

Fig. 5 is a schematic view showing a light source apparatus. In the present example, a ring-type laser oscillator was formed, and a multicolor light source was prepared.

The light source apparatus is composed of excitation light source 401, first photocoupler 402, rare-earth element doped fiber 403, second photocoupler 404, third photocoupler 405, first output end 406, and second output end 407.

As rare-earth element doped fiber 403, there was used an erbium-doped fluoride fiber having a length of 1m and an erbium concentration of 2000ppm.

A semiconductor laser was used as excitation light source 401. Output was 400mW at a wavelength of 972nm.

First photocoupler 402 was installed for supplying excitation light to the ring-type oscillator.

Second photocoupler 404 and third photocoupler 405 were installed for respectively taking 543nm laser light and 850nm laser light out of the oscillator. Regarding branching ratio, branching ratio of 550nm light was 50% in second photocoupler 404. It was 30% with 850nm light in third photocoupler 40.

The excitation light outputted from excitation light source 401 activates erbium ions of rare-earth element doped fiber 403. The activated erbium ions emitted various ASE lights. By their circulation in the ring oscillator, gain was obtained successively, thereby reaching laser oscillation.

In the present example, 543nm laser light was branched at second photocoupler and then its laser light was outputted from first output end 406. 850nm laser light was branched at third photocoupler 405 and then outputted from second output end 407. By changing branching ratio of photocoupler, it becomes possible to control output.

543nm laser light of 3mW was outputted from first output end 406, and 850nm laser light of 2.5mW was outputted from second output end 407.

By selecting fiber used for the ring oscillator, it is possible to give a sufficiently large fiber bending loss, with respect to a long wavelength light such as 1550nm band light. Therefore, laser oscillation of 1550nm band light was not found.

Although light of short wavelength region was not problematic in the present example, it is optional in some cases to use a filter module as shown in Example 3. By using absorptive filter, it becomes possible to control gain at various wavelength regions and to control output.

Although optical isolator was not used in the present example, it becomes possible to get stabilization and higher output by setting the direction of light circulating through the ring oscillator to a single direction by using isolator.

## Claims

1. A light source apparatus comprising at least a excitation light source and a photocoupler, a light source medium formed of one kind of a single, rare-earth element doped fiber that is excited by the excitation light source and has two terminals, and an output end formed of an optical fiber, the light source apparatus being **characterized in that** an optical component having at least one of reflection, branching or attenuation function is provided in anywhere of an optical circuit from the light source medium to the output terminal and that it is possible to output lights of different wavelengths derived from different spontaneous emission light peaks that are generated from rare-earth element ions added to the rare-earth element doped fiber, and that at least one of the lights to be obtained is visible light.

2. A light source apparatus according to claim 1, wherein the excitation light source is an amplified spontaneous emission light (ASE) light source.

3. A light source apparatus according to claim 1, wherein the excitation light source is a laser light source.

4. A light source apparatus according to claim 1, **characterized in** having both of an ASE light output end and a laser output end in the light source apparatus.

5. A light source apparatus according to claim 1, **characterized in** having in the light source apparatus at least one output end that simultaneously outputs a natural emission light and a laser light respectively derived from at least two natural emission light peaks of a rare-earth that has been added to the rare-earth element doped fiber, and in having an output end that outputs a natural emission light or laser light derived from one other than the natural emission light peaks.
